# EUROPÄISCHE PATENTANMELDUNG

(11) **EP 1 329 832 A1**
(43) Veröffentlichungstag der Anmeldung: **23.07.2003**
(21) Anmeldenummer: 03000270.3
(22) Anmeldetag: 08.01.2003
(51) Int. Cl.: G06F 17/60

(54) **Verfahren zur interaktiven Optimierung von Produkteigenschaften**

(30) Priorität: 21.01.2002 DE 10202093
(71) Anmelder: Siemens Audiologische Technik GmbH, 91058 Erlangen (DE)
(72) Erfinder: Kortekaas, Reinier, Dr., 91058 Erlangen (DE); Mergell, Patrick, Dr., 91058 Erlangen (DE)
(74) Vertreter: Berg, Peter, Dipl.-Ing.

(57) **Zusammenfassung**

Die Gestaltung von Produkteigenschaften soll durch Kundenbefragung optimiert werden. Hierzu ist vorgesehen, potentielle Kunden über das Internet zu befragen (2) und deren Rückantwort automatisch auszuwerten (9). Die potentiellen Kunden können entsprechend ihrer Interessenprofile in Kategorien eingeteilt werden, so dass über das Internet spezielle Kategorien von Kunden gezielt befragt werden können.

## Beschreibung

Die vorliegende Erfindung betrifft eine Vorrichtung und ein Verfahren zur Optimierung von Eigenschaften eines Produkts durch Befragen einer Vielzahl vorgegebener potentieller Kunden und Auswerten der Ergebnisse des Befragens zur Einleitung von Optimierungsschritten. Insbesondere betrifft die vorliegende Erfindung die Optimierung von audiovisuellen Produkteigenschaften.

Vielfach besteht der Bedarf, Produkte für eine große Zahl an Abnehmern ästhetisch ansprechend oder angenehm handhabbar zu gestalten. Um eine breite positive ästhetische Gesamtwirkung oder bessere Handhabbarkeit zu erzielen, ist man in der Regel auf eine Befragung von Endkunden angewiesen, wenn entsprechende Erfahrungsträger fehlen. Die Kundenpräferenzen bezüglich audiovisueller Produkteigenschaften werden meist über Marktforschungsinstitute ermittelt. Darüber hinaus sind Befragungen von Fokusgruppen gängig, um beispielsweise Benutzeroberflächen auf Handhabbarkeit hin zu untersuchen. Derartige Befragungen sind jedoch verhältnismäßig teuer und aufwendig.

Die Aufgabe der vorliegenden Erfindung besteht darin, eine Optimierung insbesondere ästhetischer Eigenschaften eines Produkts einfacher und kostengünstiger durchführen zu können.

Erfindungsgemäß wird diese Aufgabe gelöst durch ein Verfahren zur Optimierung von Eigenschaften eines Produkts durch Befragen einer Vielzahl vorgegebener potentieller Kunden und Auswerten der Ergebnisse des Befragens zur Einleitung von Optimierungsschritten, wobei die potentiellen Kunden Internet-Teilnehmer sind und das Befragen auf der Basis des Internets erfolgt.

Darüber hinaus wird die obige Aufgabe erfindungsgemäß gelöst durch eine Vorrichtung zur Optimierung von Eigenschaften eines Produkts mit Befragungsmitteln zum Befragen einer Vielzahl vorgegebener potentieller Kunden und Auswertemitteln zum Auswerten der Ergebnisse von Befragungen zur Einleitung von Opitmierungsschritten, wobei die Befragungsmittel und Auswertemittel eine Internet-Schnittstelle zum Befragen der potentiellen Kunden über das Internet umfassen.

Vorteilhafte Weiterbildungen der Erfindung ergeben sich aus den Unteransprüchen.

Die Erfindung ermöglicht damit eine internetbasierte Optimierung von Produkteigenschaften durch den Endkunden. Der besondere Vorteil liegt darin, dass Internet-Teilnehmer sehr zahlreich sind und verschiedensten Zielgruppen zugeordnet werden können. Durch interaktive Fragebögen lassen sich beliebige Fragestellungen in Bezug auf Produkteigenschaften, die über das Internet vielfältig und multimedial wiedergegeben werden können, flexibel verfolgen. Die Art der Befragung und die Form der Auswertung kann direkt vom Hersteller überwacht und spezifiziert werden. Ferner gibt es keine zeitlichen Restriktionen für den Test-Teilnehmer. Schließlich ist auch der Organisationsaufwand zur Durchführung einer solchen Internetbefragung im Hinblick auf Probandenvergütung, z. B. durch e-cash, und Terminplanung sowie Räumlichkeiten vernachlässigbar.

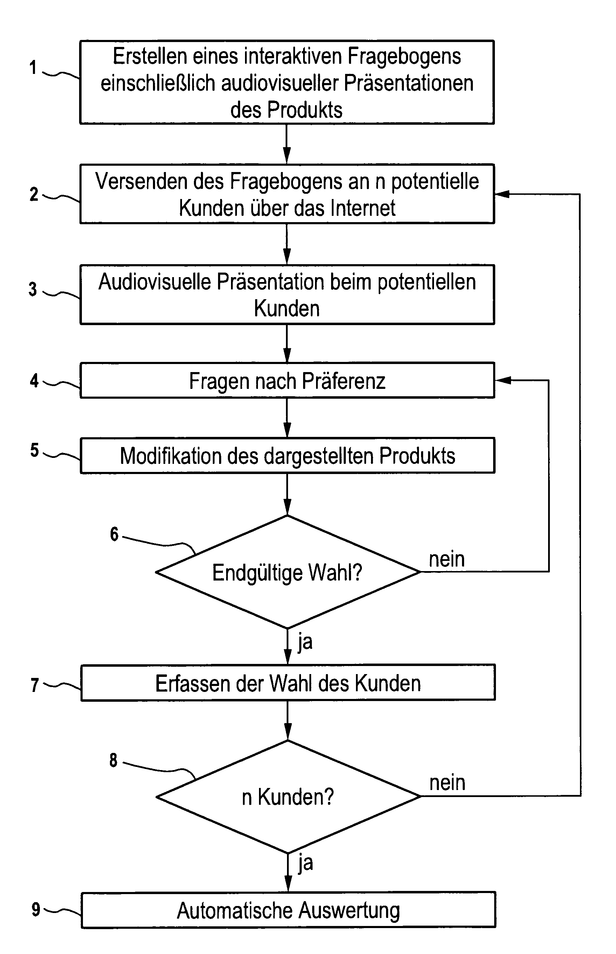

Die vorliegende Erfindung wird nun anhand der beigefügten Zeichnung näher erläutert, die ein schematisches Ablaufdiagramm des erfindungsgemäßen Verfahrens zeigt.

Die nachfolgend beschriebenen Ausführungsbeispiele stellen bevorzugte Ausführungsformen der Erfindung dar.

Gemäß dem in der Zeichnung dargestellten Ausführungsbeispiel beginnt das erfindungsgemäße Verfahren in Schritt 1 mit dem Erstellen eines interaktiven Fragebogens einschließlich mehrerer audiovisueller Präsentationen beziehungsweise mehrerer Alternativen des Produkts. In einem 2. Schritt versendet der Hersteller den interaktiven Fragebogen an n potentielle Kunden über das Internet. Der Kunde kann die audiovisuelle Präsentation gemäß Schritt 3 aufrufen und wird hierzu gemäß Schritt 4 nach Präferenzen beziehungsweise Kategorien befragt. Gibt der Kunde eine spezielle Präferenz beziehungsweise Kategorie an, so wird gemäß Schritt 5 das dargestellte Produkt entsprechend der Präferenz des Kunden modifiziert. Das Abfragen nach Präferenzen und das Modifizieren des dargestellten Produkts in den Schritten 4 und 5 wird solange wiederholt, bis der Kunde entsprechend Schritt 6 seine endgültige Wahl getroffen hat. Anschließend wird gemäß Schritt 7 die endgültige Wahl des Kunden erfasst. Diese individuelle Wahl wird für eine beliebige Anzahl von n Kunden durchgeführt, so dass letztendlich n Kundenbefragungen vorliegen. Aufgrund dieser n Kundenbefragungen wird gemäß Schritt 9 eine automatische Auswertung durchgeführt, anhand der dem Produkt beispielsweise eine endgültige Form gegeben werden kann.

Ein konkretes Beispiel für die Anwendung dieses Verfahrens wäre die Festlegung der Zahl der Bedienungselemente zur Einstellung einer Hörgeräteverstärkung. Zunächst werden mehrere Eigenschaftsalternativen (A, B, ...) dem potentiellen Kunden audiovisuell präsentiert. Der Kunde wird hierbei beispielsweise befragt, ob er für die Verstärkung ein Einstellrad oder einen Taststufenschalter bevorzugt. Bevorzugt er ein Einstellrad, so wird dieses audiovisuell präsentiert. Dieser Prozess kann für andere Eigenschaften des Hörgeräts, beispielsweise Form, Batterielebensdauer, etc. in ähnlicher Weise bis zu Abbruchkriterien fortgesetzt werden. Damit lässt sich automatisch eine Vielzahl von Meldungen potentieller Kunden über das zu gestaltende Produkt erfassen und auswerten.

Ein alternativer Verfahrensablauf besteht darin, dass sich Internetnutzer als "Produkttester" unter Angabe einer e-mail-Adresse und bestimmten Interessengebieten beim Hersteller oder Befragungsinstitut melden. Die Produkttester werden aus einem Pool anhand ihrer Interessenprofile für bestimmte Produkte ausgewählt und per e-mail zur Stimmabgabe aufgefordert. Damit lässt sich der Kreis der Produkttester durch den Hersteller gezielt steuern. Als Vergütung für eine auswertbare Rückmeldung kann der Produkttester e-cash oder sogenannte payback-Punkte erhalten.

Das erfindungsgemäße Befragungssystem eigent sich insbesondere hinsichtlich der Gestaltung von Software-User-Interfaces, Automobildesign, etc., wenn geschmackliche oder ästhetische Fragen sowie Fragen der Handhabbarkeit im Vordergrund stehen.

## Patentansprüche

1. Verfahren zur Optimierung von Eigenschaften eines Produkts durch
Befragen (4) einer Vielzahl vorgegebener potentieller Kunden,
Auswerten (9) der Ergebnisse des Befragens zur Einleitung von Optimierungsschritten,
**dadurch gekennzeichnet, dass**
die potentiellen Kunden Internet-Teilnehmer sind und das Befragen auf der Basis des Internets (2) erfolgt.

2. Verfahren nach Anspruch 1, wobei das Befragen mittels elektronischer Nachrichten, insbesondere E-mails und/oder SMS, erfolgt.

3. Verfahren nach Anspruch 1 oder 2, wobei das Befragen interaktiv, insbesondere durch interaktive Fragebögen (1) erfolgt.

4. Verfahren nach einem der Ansprüche 1 bis 3, wobei das Befragen eine visuelle oder audiovisuelle Präsentation (3) beim Kunden über das Internet umfasst.

5. Verfahren nach einem der Ansprüche 1 bis 4, wobei das Produkt über das Internet interaktiv modifiziert (5) und/oder Alternativen des Produkts über das Internet ausgewählt (6) werden.

6. Verfahren nach Anspruch 4 oder 5, wobei die Verfahrensschritte des Präsentierens (3), Modifizierens (5) und/oder Auswählens (6) mehrfach wiederholt werden.

7. Verfahren nach einem der Ansprüche 1 bis 6, wobei die potentiellen Kunden vor dem Befragen aufgrund von Interessenprofilen in Kategorien eingeteilt werden und das Befragen spezifisch auf der Grundlage der jeweiligen Kategorie erfolgt.

8. Verfahren nach einem der Ansprüche 1 bis 7, wobei der potentielle Kunde nach dem Befragen vorzugsweise durch e-cash vergütet wird.

9. Vorrichtung zur Optimierung von Eigenschaften eines Produkts mit
Befragungsmitteln zum Befragen (4) einer Vielzahl vorgegebener potentieller Kunden und
Auswertemitteln zum Auswerten (9) der Ergebnisse von Befragungen zur Einleitung von Opitmierungsschritten,
**dadurch gekennzeichnet, dass**
die Befragungsmittel und Auswertemittel eine Internet-Schnittstelle zum Befragen der potentiellen Kunden über das Internet (2) umfassen.

10. Vorrichtung nach Anspruch 9, wobei die potentiellen Kunden durch die Befragungsmittel interaktiv befragbar (1) sind.

11. Vorrichtung nach Anspruch 9 oder 10, wobei durch die Befragungsmittel visuelle oder audiovisuelle Präsentationen (3) durchführbar sind.
